# EUROPÄISCHE PATENTSCHRIFT

(11) **EP 1 309 807 B1**
(45) Veröffentlichungstag und Bekanntmachung des Hinweises auf die Patenterteilung: **04.10.2006**
(21) Anmeldenummer: 01984493.5
(22) Anmeldetag: 09.08.2001
(51) Int. Cl.: F16F 15/14, F16F 15/173

(54) **DREHSCHWINGUNGSDÄMPFER**
TORSIONAL VIBRATION DAMPER
AMORTISSEUR DE VIBRATIONS DUES A LA TORSION

(30) Priorität: 09.08.2000 DE 10039640; 12.08.2000 DE 10040137; 23.03.2001 DE 10114610
(43) Veröffentlichungstag der Anmeldung: 14.05.2003
(73) Patentinhaber: Hasse & Wrede GmbH, 12681 Berlin (DE); Volkswagen Aktiengesellschaft, 38436 Wolfsburg (DE)
(72) Erfinder: SANDIG, Jörg, 10318 Berlin (DE); KIENER, Wolfgang, 10247 Berlin (DE); FRANKE, Jens Erik DR., 38518 Gifhorn (DE)
(74) Vertreter: Mattusch, Gundula
(86) Internationale Anmeldenummer: PCT/EP2001/009213
(87) Internationale Veröffentlichungsnummer: WO 2002/012751

(56) Entgegenhaltungen:
- DE-A- 19 911 560
- DE-U- 29 521 768
- US-A- 6 026 776

## Beschreibung

Die Erfindung betrifft einen als Gegengewicht dienenden Drehschwingungsdämpfer für den Massenausgleich einer rotierenden Kurbelwelle, insbesondere für einen Verbrennungsmotor, mit einem Gehäuse mit einer geschlossenen Arbeitskammer mit einer Innen- und einer Außenwand und mindestens einer in die Arbeitskammer eingebrachten und gegenüber dieser beweglichen Sekundärmasse, welche über sich in die Arbeitskammer erstreckende Federelemente gegenüber dem Gehäuse geführt ist, wobei der Drehschwingungsdämpfer an einer Kurbelwange der Kurbelwelle befestigt ist und sein Massenmittelpunkt dem Kurbelzapfen gegenüber liegt, bezogen auf die Rotationsachse der Kurbelwelle.

Die Kurbelbetriebe von Kolbenmaschinen werden üblicherweise mit Gegengewichten versehen, welche die freien Massenkräfte und -momente 1. Ordnung bestmöglich ausgleichen sollen. Der Begriff"1. Ordnung" besagt dabei, dass diese Kräfte und Momente mit der einfachen Drehfrequenz der Kurbelwelle oszillieren.

Die Gegengewichte werden zumeist an den Kurbelwangen diametral entgegengesetzt zum Hubzapfen angebracht, wobei der Begriff "diametral" auch einen Winkelversatz von bis zu 30° mitumfasst. Bei kleineren Maschinen werden die Gegengewichte als integraler Bestandteil der Kurbelwange gegossen oder geschmiedet.

In seltenen Fällen enthält das Schwungrad einen exzentrischen Massenanteil, der als Gegengewicht dient. Es ist auch möglich, an der Kraftgegenseite eine separate Unwuchtscheibe mit der Kurbelwelle mitlaufen zu lassen.

Verbrennungskraftmaschinen mit mehreren Kurbelkröpfungen verlangen häufig einen Drehschwingungsdämpfer oder gedämpfte Tilger. Nach den Gesetzen der Maschinendynamik muss ein solcher Dämpfer an der Kraftgegenseite mit der Kurbelwelle im Allgemeinen drehsteif verbunden werden. Unabhängig davon, ob dieser Dämpfer frei außerhalb des Motors oder unter einer abdeckenden Haube liegt oder im Räderkasten eingeschlossen ist, vergrößert er in jedem Falle die Gesamtlänge des Motors und damit den für dessen Einbau erforderlichen Platz in einem Kraftfahrzeug oder ähnlichem.

Allerdings sind die Einbauräume für einen Motor nicht derart dimensioniert, dass sie auch noch Platz für den zusätzlichen Dämpfer haben. Dies gilt insbesondere bei kompakteren Straßenfahrzeugen.

Ein Drehschwingungsdämpfer der gattungsgemäßen Art ist aus der DE-A 199 49 206 A1 bekannt. In dieser Druckschrift sind mit der Sekundärmasse in kontaktstehende Federn offenbart, die in Umfangsrichtung ausgerichtet sind. Dabei beruht der angestrebte Effekt der Schwingungsdämpfung auf der Anordnung von Schraubenfedern in Umfangsrichtung zwischen den Elementen einer mehrteiligen Sekundärmasse.

Aus dem DE-GM 1 967 944 ist ein Drehschwingungsdämpfer entnehmbar, bei dem radial angeordnete Federelemente vorgesehen sind, die im Gehäuse bzw. in der Sekundärmasse gleitend gelagert sind. Die radial angeordneten Federstäbe können dabei auch in ihren primärseitigen Passsitzen am Antriebsteil fest eingespannt und in der sekundärseitigen Passbohrung gleitend gelagert sein. Die Lagerzapfen sind gegenüber dem wirksamen Federquerschnitt vergrößert. Die primärseitigen Lagerzapfen sind dabei auch in dem Bereich verstärkt, in welchem sie durch die federstabnormalen Gleitflächen am jeweiligen Antriebsteil und an der jeweiligen Schwungmasse auf Abscherung beansprucht sind.

Aufgabe der vorliegenden Erfindung ist es, einen als Gegengewicht dienenden bzw. einsetzbaren Drehschwingungsdämpfer bereit zu stellen, der zu keiner Vergrößerung und insbesondere zu keiner Vergrößerung des Einbauraumes für den damit ausgestatteten Motor, insbesondere in Richtung der Kurbelwellenachse, führt.

Gelöst wird diese Aufgabe durch einen Drehschwingungsdämpfer gemäß der Leere des Anspruchs 1.

Bevorzugte Ausführungsformen sind in den Unteransprüchen beschrieben.

Der erfindungsgemäße Drehschwingungsdämpfer besitzt ein geschlossenes Gehäuse, das in Form eines Gegengewichtes vorliegt, wobei innerhalb des Gehäuses eine Arbeitskammer ausgebildet ist, in die eine Sekundärmasse oder mehrere Sekundärmassen sowie das Viskosedämpfungsmedium eingebracht sind. Die zwischen den Wänden der Arbeitskammer und der Sekundärmasse verbleibenden Räume und insbesondere Spalträume werden mit einem viskosen Dämpfungsmedium gefüllt, bei dem es sich vorzugsweise um ein hochviskoses Silikonöl oder um Motoröl handelt. Das Motoröl stammt vorzugsweise aus dem Schmierkreislauf.

Üblicherweise wird die Arbeitskammer derart ausgestaltet, dass sie mit einem Deckel versehen ist, der nach Einsetzen der Sekundärmasse (m) auf die Arbeitskammer aufgesetzt wird und diese fluiddicht verschließt. Der Deckel wird dabei mit der Arbeitskammer und somit mit dem Drehschwingungsdämpfer fest
verbunden, beispielsweise durch ein Strahlschweißverfahren. Der Deckel stellt dann auch eine Wand der Arbeitskammer dar.

Für das Einfüllen des Dämpfungsmediums kann eine Öffnung in dem Deckel oder auch anderswo vorgesehen sein, welche nach Einfüllen des Dämpfungsmediums verschlossen wird.

In der Arbeitskammer sind somit eine Sekundärmasse oder auch mehrere Sekundärmassen nach Aufsetzen des Deckels eingeschlossen. Beim Auftreten von Drehschwingungen bewegen sich die Sekundärmasse oder die Sekundärmassen relativ zur Arbeitskammer, wobei das Dämpfungsmedium in den engen Arbeitsspalten wechselnd geschert wird. Diese Wechselscherung, deren Mechanismus im übrigen bekannt ist, führt zur Dissipation von Schwingenergie, also zur Begrenzung von Drehschwingungen.

Das Gehäuse des erfindungsgemäßen Drehschwingungsdämpfers ist vorzugsweise exzentrisch angeordnet. Nach einer weiteren bevorzugten Ausführungsform ist der erfindungsgemäße Drehschwingungsdämpfer an der Kurbelwange einer Kurbelwelle befestigt. Vorzugsweise liegt sein Massenmittelpunkt dem Kurbelzapfen gegenüber, bezogen auf die Rotationsachse der Kurbelwelle.

Die Wände der Arbeitskammer des erfindungsgemäßen Drehschwingungsdämpfers werden vorzugsweise von einer Innenwand, einer Rückwand, einer Außenwand und dem Deckel gebildet. Der Deckel und die Rückwand erstrecken sich dabei im wesentlichen radial, während sich die Innenwand und die Außenwand der Arbeitskammer im wesentlichen axial erstrecken sowie vorzugsweise konzentrisch zur Rotationsachse ausgebildet sind. Die Innenwand liegt somit radial innen, während die Außenwand radial außen liegt. Der erfindungsgemäße Drehschwingungsdämpfer besitzt bei dieser bevorzugten Ausführungsform in etwa die Form eines scheibenförmigen Segmentes, insbesondere eines scheibenförmigen Ringsegmentes.

Bei der Sekundärmasse kann es sich auch um ein in etwa scheibenförmiges Ringsegment handeln; in diesem Falle besitzt dann auch die Arbeitskammer in etwa die Form eines scheibenförmigen Ringsegmentes. Es existieren Spalträume zwischen der Rückwand und dem Deckel sowie der jeweils gegenüber liegenden Stirnfläche des Ringscheibensegmentes. Weitere Spalträume bestehen zwischen der Innenwand und der Außenwand und den jeweils gegenüber liegenden Innenflächen und Außenflächen des Ringscheibensegmentes.

Nach einer bevorzugten Ausführungsform ist die Sekundärmasse konzentrisch in der Arbeitskammer zur Rotationsachse der auszugleichenden Kurbelwelle geführt. In diesem Falle ist vorzugsweise nur eine Sekundärmasse vorhanden, die weiterhin bevorzugt durch mindestens eine Speiche gegenüber den umgebenden Wänden der Arbeitskammer geführt wird. Insbesondere sind dabei zwei Speichen vorhanden, die einerseits an der Innenwand und andererseits an der Sekundärmasse befestigt sind.

Die Erfindung wird nachstehend anhand der beigefügten Zeichnungen näher erläutert.

Von diesen Zeichnungen zeigen:
- Figur 1: eine Ansicht eines Kurbelwellenabschnittes mit einem erfindungsgemäßen Drehschwingungsdämpfer in axonometrischer Darstellung,
- Figur 2: eine Explosionsdarstellung des in der Figur 1 gezeigten Drehschwinungsdämpfers,
- Figur 3: einen Mittelschnitt durch einen erfindungsgemäßen Drehschwingungsdämpfer entlang der Linie II - II von Figur 4
- Figur 4: einen Querschnitt entlang der Linie I - I von Figur 3

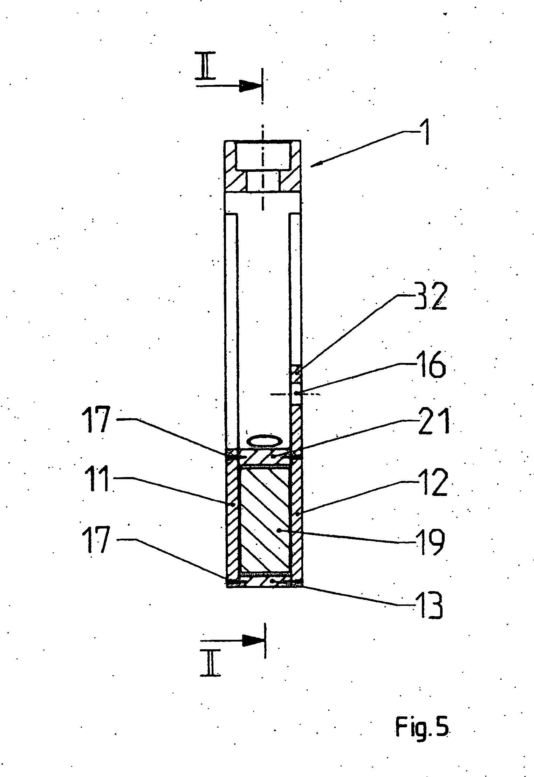

- Figur 5: eine der Figur 4 analoge Ansicht einer weiteren Ausführungsform

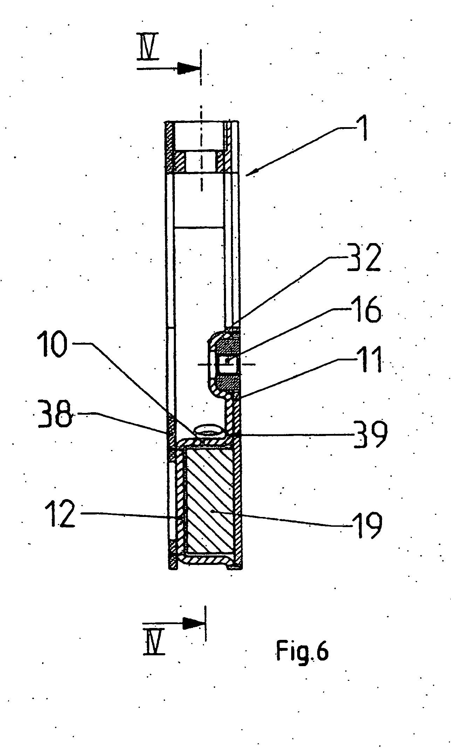

- Figur 6: eine der Figur 5 analoge Ansicht einer weiteren Ausführungsform

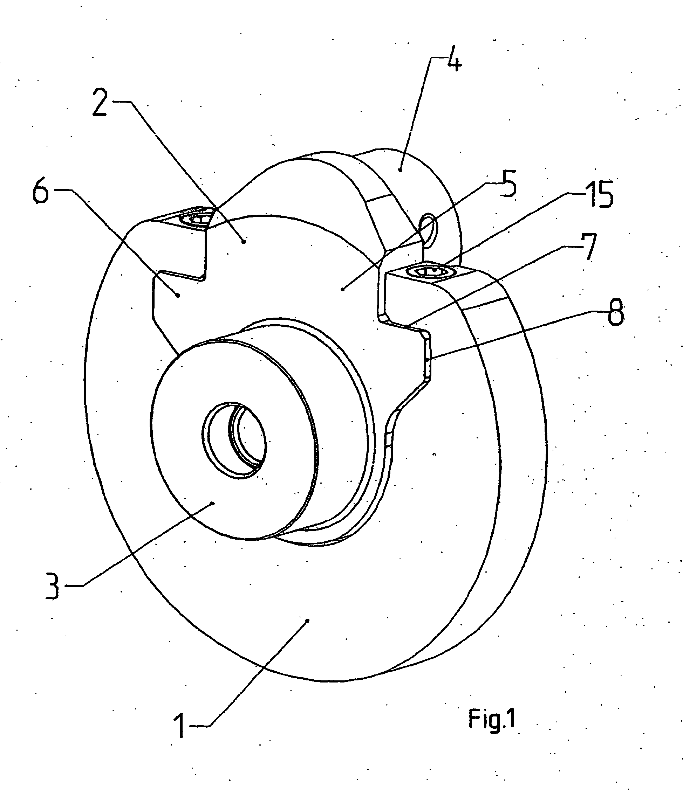

In der Fig. 1 ist ein Abschnitt 2 einer Kolbenmaschine-Kurbelwelle mit dem Grundlager-Wellenzapfen 3 dargestellt, um dessen Mittelachse die Kurbelwelle rotiert. An den Wellenzapfen 3 schließt sich eine Kurbelwange 5 an, welche die Verbindung zum Kurbelzapfen 4 bildet, auf dem der Fuß der nicht dargestellten Pleuelstange gelagert ist. -

Die Kurbelwange 5 weist zwei Auskragungen 6 auf, die Auf- und Anlageflächen 7, 8 zur Aufnahme des Drehschwingungsdämpfers 1 bereitstellen. Befestigungsschrauben 15 verbinden den Drehschwingungsdämpfer 1 mit der Kurbelwelle. Der Drehschwingungsdämpfer 1 bildet dabei ein Gegengewicht und ist in etwa hufeisenförmig gestaltet.

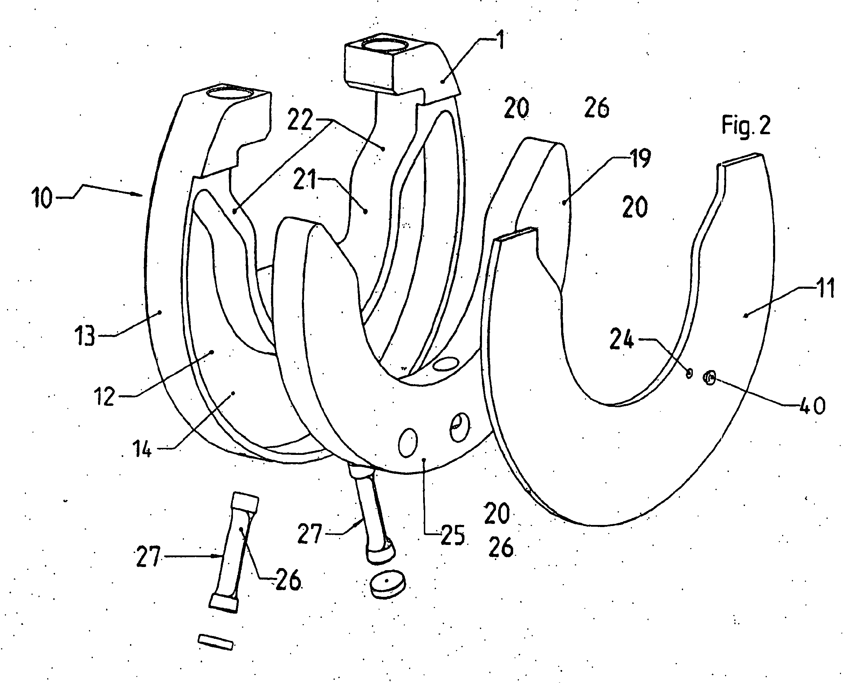

In der Fig. 2 ist der erfindungsgemäße Drehschwingungsdämpfer 1 in axonometrischer Darstellung gezeigt. Der Drehschwingungsdämpfer 1 bildet eine Art einstückiges Gehäuse 10 für eine Arbeitskammer 14, die umgrenzt ist von einer Außenwand 13, einer Rückwand 12, einer Innenwand 21 und einem Übergangs-Wandbereich 22 zwischen der Außenwand 13 und der Innenwand 21. Durch den Deckel 11 kann die Arbeitskammer 14 hermetisch verschlossen werden, in der sich die Sekundärmasse 19 befindet.

In dem Deckel 11 befindet sich eine Öffnung 24, die durch eine Schraube bzw. Stopfen 40 verschlossen werden kann und durch die hochviskoses Silikonöl (nicht gezeigt) in die Arbeitskammer 14 eingefüllt werden kann.

Die Sekundärmasse 19 stellt eine Art scheibenförmiges Ringsegment dar. Auf deren Stirnflächen 25 sind Ausnehmungen 26 zur Aufnahme von Axialscheiben 20 zur Führung in axiale Richtung vorhanden.

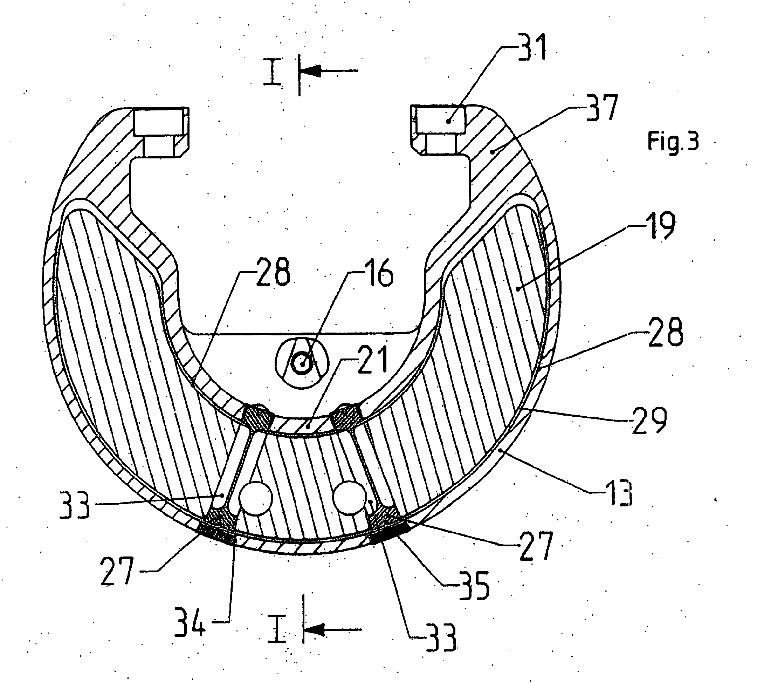

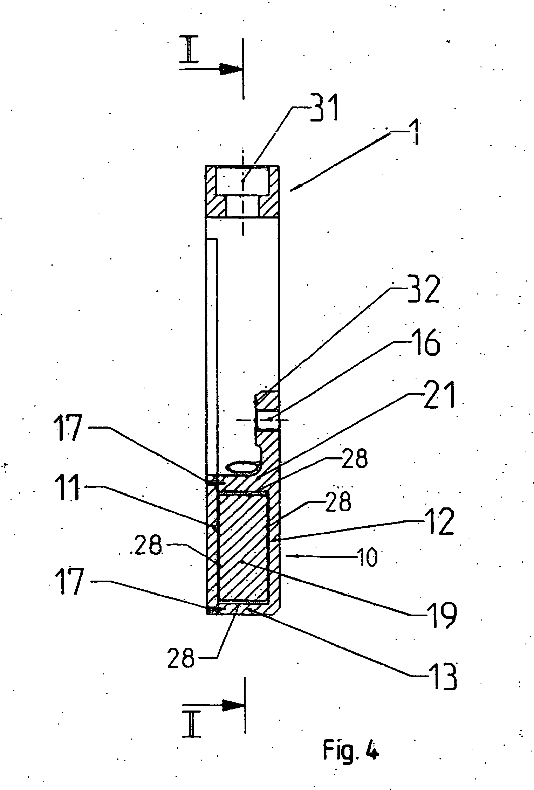

Für die berührungsfreie Führung der Sekundärmasse 19 dienen zwei Speichen 27. Wie man insbesondere aus der Fig. 3 ersieht, sind diese Speichen 27 an ihrem einwärts gerichteten Ende in der Innenwand 21 und an ihrem radial auswärts befindlichen Ende in der Sekundärmasse 19 fest eingespannt. Zwischen der Innenmantelfläche 29 der Außenwand 13 und der gegenüberliegenden Außenmantelfläche einerseits und der Innenwand 21 und der gegenüberliegenden Innenmantelfläche der Sekundärmasse 19 andererseits befindet sich jeweils ein Spaltraum 28, der durch das nicht gezeigte viskose Silikonöl gefüllt ist. Derartige Spalträume 28 befinden sich auch zwischen den Stirnflächen 25 der Sekundärmasse 19 und der gegenüberliegenden Rückwand 12 bzw. dem gegenüberliegenden Deckel 11; dies geht insbesondere aus der Fig. 4 hervor.

Die Sekundärmasse 19 kann unter Verzicht auf die Führung mit den Speichen 27 auch von einer Gleit- oder Wälzlagerung oder einer sonstwie gearteten Einrichtung gestützt werden.

Wie man insbesondere aus der Fig. 4 ersieht, ist der Deckel 11 mittels einer Strahlschweißnaht 17 auf die Arbeitskammer 14 bzw. auf das Gehäuse 10 im Drehschwingungsdämpfer 1 fluiddicht aufgesetzt; es sind aber auch andere Deckelbefestigungen möglich. Der Drehschwingungsdämpfer 1 verfügt ferner über eine axiale Anlage 32 mit einem axialen Anschraubloch 16, durch das eine axiale Schraube (nicht dargestellt) in die Kurbelwange 5 eingreift. Ferner sind die angesenkten Befestigungsbohrungen 31 für die Befestigungsschrauben 15 dargestellt. Für die Verbindung von Kurbelwelle und Drehschwingungsdämpfer 1 sind ebenfalls andere Ausführungen vorstellbar.

Wie man insbesondere aus der Fig. 3 ersieht, sind die radial innen liegenden Enden der Speichen 27 in entsprechende Bohrungen 41 in der Innenwand 21 eingeschweißt. Die gegenüberliegenden, radial auswärts befindlichen Enden der Speichen 27 verlaufen konisch und werden auf diese Weise in Bohrungen 33 in der Sekundärmasse 19 befestigt. Um diese Speichen 27 bei in die Arbeitskammer 14 eingelegter Sekundärmasse 19 in die Bohrungen 33 einführen zu können, besitzt die Außenwand 13 Öffnungen 34, die durch kleine Deckel 35 verschlossen werden können, welche beispielsweise mit der Außenwand 13 verschweißt werden. Das radial innere Ende der Speichen 27 ist daher in etwa zylinderförmig ausgestaltet, während das gegenüberliegende Ende als Konus ausgebildet ist, man vergleiche auch Fig. 2. Das Verbindungsteil 36 zwischen diesen beiden Enden ist in etwa blättchenartig, streifenartig bzw. als Biegefeder ausgebildet.

Bei dem in der Fig. 4 gezeigten Ausführungsform sind die Rückwand 12, die Außenwand 13 und die Innenwand 21 einstückig ausgeführt und auch einstückiger Bestandteil des Drehschwingungsdämpfers 1 und bilden somit ein Gehäuse 10, das durch den Deckel 11 verschlossen wird. Der oben beschriebene, in der Fig. 4 gezeigte Drehschwingungsdämpfer 1 läßt sich wirtschaftlicher herstellen, indem die Innenwand 21 und die Außenwand 13 mit dem Befestigungskragen 37 ein Rohr mit sichelförmigem Querschnitt bilden, das durch Aufschweißen von Rückwand 12 und Deckel 11 zur allseits geschlossenen Arbeitskammer 14 wird. Hier liefert die Rückwand 12 gleichzeitig die axiale Anlage 32 samt Anschraubloch 16. Diese Ausführungsform ist in der Fig. 8 gezeigt.

Eine weitergehende Ausführungsform zur rationellen Herstellung des Drehschwingungsdämpfers ist in der Fig. 9 angedeutet. Das Gehäuse 10 wird hier aus Blech in einem Tiefzieh- oder Hydroforming-Prozess spanlos umgeformt. Durch Aufschweißen des Deckels 11 entsteht die geschlossene Arbeitskammer 14, in die zuvor die Sekundärmasse 19 eingebracht wird. Die Führung dieser Sekundärmasse 19 übernehmen die oben beschriebenen Speichen 27 oder eine andere geeignete Lösung.

Die schwingfeste Verbindung zur Kurbelwelle bedingt hier die Aufdoppelung 38. Zwischen ihr und dem Deckel 11 werden die Befestigungsknaggen 37 angeordnet, die zur Aufnahme der Schrauben 15 durchbohrt und angesenkt sind. Die axiale Anlage 32 wird hier vom Blechgehäuse 10 bereitgestellt; und das axiale Anschraubloch 16, wahlweise mit einem Muttergewinde versehen, befindet sich in einem verstärkenden Einschweißstopfen.

## Patentansprüche

1. Als Gegengewicht dienender Drehschwingungsdämpfer (1) für den Massenausgleich einer rotierenden Kurbelwelle, insbesondere für einen Verbrennungsmotor, mit einem Gehäuse (10) mit einer geschlossenen Arbeitskammer (14) mit einer innen- und einer Außenwand (21,13) und mindestens einer in die Arbeitskammer (14) eingebrachten und gegenüber dieser beweglichen Sekundärmasse (19), welche über sich in die Arbeitskammer (14) erstreckende Federelemente gegenüber dem Gehäuse (10) geführt ist, wobei der Drehschwingungsdämpfer (1) an einer Kurbelwange (5) der Kurbelwelle befestigt ist und sein Massenmittelpunkt dem Kurbelzapfen (5) gegenüberliegt, bezogen auf die Rotationsachse der Kurbelwelle, wobei die Arbeitskammer (14) fluiddicht geschlossen ist und die zwischen der Sekundärmasse (19) und dem Gehäuse (10) verbleibenden Spalträume mit einem viskosen Dämpfungsmedium gefüllt sind und die Federelemente aus Speichen (27) bestehen, **dadurch gekennzeichnet, dass** die Speichen (27) mit ihren radial innenliegenden Enden an der Innenwand (21) und mit ihren radial äußeren Enden in der Sekundärmasse (19) starr befestigt und zwischen den beiden Enden als Biegefeder ausgebildet sind.

2. Drehschwingungsdämpfer nach Anspruch 1, **dadurch gekennzeichnet, dass** es sich bei dem Dämpfungsmedium um ein hochviskoses Silikonöl oder um insbesondere aus dem Schmierkreislauf stammendes Motoröl handelt.

3. Drehschwingungsdämpfer nach Anspruch 1 oder 2, **dadurch gekennzeichnet, dass** die Wände (11, 12, 13,21) der Arbeitskammer (14) eine Innenwand (21), eine Rückwand (12), eine Außenwand (13) und einen Deckel (11) umfassen.

4. Drehschwindungsdämpfer nach Anspruch 3, **dadurch gekennzeichnet, dass** entweder die Innenwand (21), die Außenwand (13) und die Rückwand (12) einstückig ausgebildet sind oder die Innenwand (21) und die Außenwand (13) einerseits und die Rückwand (12) andererseits als getrennte Bauteile ausgeführt sind.

5. Drehschwingungsdämpfer nach Anspruch 3 oder 4, **dadurch gekennzeichnet, dass** die die Arbeitskammer (14) umgrenzenden Wände (12, 13, 21) mit Ausnahme des Deckels (11) einstückiges Bestandteil der zu bedämpfenden Kurbelwelle sind.

6. Drehschwingungsdämpfer nach einem der Ansprüche 3 bis 5, **dadurch gekennzeichnet, dass** sich die Innenwand (21) und die Außenwand (13) der Arbeitskammer (14) im wesentlichen axial und die Rückwand (12) sowie der Deckel (11) im wesentlichen radial erstrecken.

7. Drehschwingungsdämpfer nach einem der Ansprüche 3 bis 6, **dadurch gekennzeichnet, dass** die Innenmantelfläche (29) der Außenwand (13) der Arbeitskammer (14) konzentrisch zur Rotationsachse der zu bedämpfenden Kurbelwelle verläuft.

8. Drehschwingungsdämpfer nach einem der vorhergehenden Ansprüche, **dadurch gekennzeichnet, dass** die Sekundärmasse (19) in der Arbeitskammer (14) konzentrisch zur Rotationsachse der auszugleichenden Kurbelwelle geführt ist.

9. Drehschwingungsdämpfer nach einem der vorhergehenden Ansprüche, **dadurch gekennzeichnet, dass** nur eine Arbeitskammer (14) vorhanden ist, in der nur eine Sekundärmasse (19) mittels zweiter Speichen (27) geführt ist.

10. Drehschwingungsdämpfer nach einem der vorhergehenden Ansprüche, **dadurch gekennzeichnet, dass** die Sekundärmasse (19) mittels einer Gleit- und/oder Wälzlagerung axial und/oder radial geführt ist.

11. Drehschwingungsdämpfer nach einem der vorhergehenden Ansprüche, **dadurch gekennzeichnet, dass** die Sekundärmasse (19) im wesentlichen die Form eines Ringscheibensegmentes besitzt und die Sekundärmasse (19) und die Arbeitskammer (14) derart dimensioniert sind, dass zwischen Vorderseite, Rückseite, Innenseite und Außenseite der Sekundärmasse (19) sowie der jeweiligen gegenüber liegenden Wand (11, 12, 13, 21) ein Spaltraum (28) verbleibt.

## Claims

1. A torsional vibration damper (1) serving as a counterweight for balancing the mass of a rotating crankshaft, in particular for an internal combustion engine, having a housing (10) with a closed operating chamber (14) with one inner and one outer wall (21, 13) and at least one secondary mass (19) which is placed in the operating chamber (14) and can be moved in relation thereto and which is mounted in the housing (10) by means of spring elements which extend into the operating chamber (14), the torsional vibration damper (1) being fixed to a crank web (5) of the crankshaft and its centre of gravity lying opposite the crank pin (5) in relation to the axis of rotation of the crankshaft, the operating chamber (14) being closed in a fluid-proof manner, the crevices remaining between the secondary mass (19) and the housing (10) being filled with a viscous damping medium and the spring elements consisting of spokes (27),
**characterised in that**
the radially inner ends of the spokes (27) are fixed rigidly to the inner wall (21), the radially outer ends of the spokes (27) are fixed rigidly in the secondary mass (19) the areas of the spokes (27) between the two ends are designed as spiral springs.

2. A torsional vibration damper in accordance with claim 1,
**characterised in that**
the damping medium is a high viscosity silicon oil or, in particular, engine oil from the lubrication circuit.

3. A torsional vibration damper in accordance with claim 1 or 2,
**characterised in that**
the walls (11, 12, 13, 21) of the operating chamber (14) comprise an inner wall (21), a rear wall (12), an outer wall (13) and a cover (11).

4. A torsional vibration damper in accordance with claim 3,
**characterised in that**
either the inner wall (21), the outer wall (13) and the rear wall (12) are formed as one piece, or the inner wall (21) and the outer wall (13) on one hand and the rear wall (12) on the other are designed as separate components.

5. A torsional vibration damper in accordance with claim 3 or 4,
**characterised in that**
the walls (12, 13, 21) delimiting the operating chamber (14) with the exception of the cover (11) form a single-part component of the crankshaft to be damped.

6. A torsional vibration damper in accordance with one of claims 3 to 5,
**characterised in that**
the inner wall (21) and the outer wall (13) of the operating chamber (14) extend essentially axially and the rear wall (12) and the cover (11) extend essentially radially.

7. A torsional vibration damper in accordance with one of claims 3 to 6,
**characterised in that**
the inner face (29) of the outer wall (13) of the operating chamber (14) runs concentric to the axis of rotation of the crankshaft to be damped.

8. A torsional vibration damper in accordance with one of the preceding claims,
**characterised in that**
the secondary mass (19) is mounted in the operating chamber (14) concentric to the axis of rotation of the crankshaft to be balanced.

9. A torsional vibration damper in accordance with one of the preceding claims,
**characterised in that**
only one operating chamber (14) is provided in which only one secondary mass (19) is mounted by means of two spokes (27).

10. A torsional vibration damper in accordance with one of the preceding claims,
**characterised in that**
the secondary mass (19) is mounted axially and/or radially by means of a sliding and/or roller bearing.

11. A torsional vibration damper in accordance with one of the preceding claims,
**characterised in that**
the secondary mass (19) is shaped essentially like a ring disk segment, and the secondary mass (19) and the operating chamber (14) are dimensioned such that a crevice (28) remains between the front face, the rear face, the inner face and the outer face of the secondary mass (19) and the corresponding opposite wall (11,12, 13, 21).

## Revendications

1. Amortisseur de vibrations torsionnelles (1) servant de contrepoids pour compenser la masselotte d'un vilebrequin tournant, en particulier pour un moteur à combustion interne, équipé d'un boîtier (10) muni d'une chambre de travail (14) fermée comportant une paroi intérieure et une paroi extérieure (21, 13) et d'au moins une masselotte secondaire (19), introduite dans la chambre de travail (14) et mobile par rapport à elle, guidée par rapport au boîtier (10) grâce à des éléments élastiques qui s'étendent dans la chambre de travail (14), l'amortisseur de vibrations torsionnelles (1) étant fixé à une joue (5) du vilebrequin et son centre de gravité se trouve en face du maneton de vilebrequin (5) quand on se réfère à l'axe de rotation du vilebrequin, la chambre de travail (14) étant fermée de manière étanche aux fluides et les intervalles qui restent entre la masselotte secondaire (19) et le boîtier (10) étant remplis d'un agent d'amortissement visqueux et les éléments élastiques sont des rayons (27),
**caractérisé en ce que** les rayons (27) par leurs extrémités intérieures radiales sont fixées de manière rigide à la paroi intérieure (21) et par leurs extrémités extérieures radiales dans la masselotte secondaire et qu'entre leurs deux extrémités elles sont conçues comme ressorts de flexion.

2. Amortisseur de vibrations torsionnelles selon la revendication 1, **caractérisé en ce que** l'agent d'amortissement est une huile de silicone très visqueuse ou en particulier de l'huile à moteur issue du circuit de graissage.

3. Amortisseur de vibrations torsionnelles selon la revendication 1 ou 2, **caractérisé en ce que** les parois (11, 12, 13, 21) de la chambre de travail (14) comprennent une paroi intérieure (21), une paroi arrière (12), une paroi extérieure (13) et un couvercle (11).

4. Amortisseur de vibrations torsionnelles selon la revendication 3, **caractérisé en ce que** soit la paroi intérieure (21), la paroi extérieure (13) et la paroi arrière (12) forment une seule pièce soit la paroi intérieure (21) et la paroi extérieure (13) d'une part et la paroi arrière (12) d'autre part sont des composants distincts.

5. Amortisseur de vibrations torsionnelles selon la revendication 3 ou 4, **caractérisé en ce que** les parois (12, 13, 21) qui entourent la chambre de travail (14) sauf le couvercle (11) sont un composant en une seule partie du vilebrequin à amortir.

6. Amortisseur de vibrations torsionnelles selon l'une des revendications 3 à 5, **caractérisé en ce que** la paroi intérieure (21) et la paroi extérieure (13) de la chambre de travail (14) ont une étendue pratiquement axiale et la paroi arrière (12) ainsi que le couvercle (11) une étendue pratiquement radiale.

7. Amortisseur de vibrations torsionnelles selon l'une des revendications 3 à 6, **caractérisé en ce que** la surface latérale intérieure (29) de la paroi extérieure (13) de la chambre de travail (14) est concentrique à l'axe de rotation du vilebrequin à amortir.

8. Amortisseur de vibrations torsionnelles selon l'une des revendications précédentes, **caractérisé en ce que** la masselotte secondaire (19) dans la chambre de travail (14) est guidée concentriquement à l'axe de rotation du vilebrequin à compenser.

9. Amortisseur de vibrations torsionnelles selon l'une des revendications précédentes, **caractérisé en ce qu'**il n'y a qu'une chambre de travail (14) dans laquelle une seule masselotte secondaire (19) est guidée à l'aide de deux rayons (27).

10. Amortisseur de vibrations torsionnelles selon l'une des revendications précédentes, **caractérisé en ce que** la masselotte secondaire (19) est guidée axialement et/ou radialement à l'aide d'un montage à glissement et/ou à roulement.

11. Amortisseur de vibrations torsionnelles selon l'une des revendications précédentes, **caractérisé en ce que** la masselotte secondaire (19) a pratiquement la forme d'un segment de rondelle et que la masselotte secondaire (19) et la chambre de travail (14) ont des dimensions telles qu'il reste une intervalle (28) entre le côté avant, le côté arrière, le côté intérieur et le côté extérieur de la masselotte secondaire (19) d'une part et la paroi (11, 12, 13, 21) placée respectivement en face.
